# EUROPÄISCHE PATENTANMELDUNG

(11) **EP 1 182 061 A2**
(43) Veröffentlichungstag der Anmeldung: **27.02.2002**
(21) Anmeldenummer: 01119980.9
(22) Anmeldetag: 18.08.2001
(51) Int. Cl.: B60C 29/02

(54) **Reifenventil für die Felge eines Luftreifens an einem Fahrzeug**

(30) Priorität: 22.08.2000 DE 20014528 U; 07.09.2000 DE 20015467 U
(71) Anmelder: Alligator Ventilfabrik GmbH, D-89537 Giengen (DE)
(72) Erfinder: Reinhardt, Rolf, 89537 Giengen/ Brenz (DE)
(74) Vertreter: Hiebsch, Gerhard F., Dipl.-Ing.

(57) **Zusammenfassung**

Bei einem Reifenventil (10) für die Felge (Q) eines Luftreifens an einem Fahrzeug mit einem eine Längsbohrung (16) enthaltenden Ventilkörper (12) aus starrem, insbesondere metallischem Werkstoff mit einends angeordnetem Ventilfuß (20), der eine vom Ventilkörper (12) radial abragende Ringschulter (24) aufweist, ist der Ventilkörper (12) mit einer koaxialen Ventilhülse (48) durch ein Zwischenrohr (44) aus elastischem Werkstoff in Abstand verbunden und die Ventilhülse (48) zur Längsachse (A) des Reifenventils (10) begrenzt neigbar. Die Ventilhülse soll aus starrem Werkstoff -- insbesondere aus einem metallischen Werkstoff -- bestehen; dass das Zwischenrohr (44) liegt einends einem Hohlschaft (28) des Ventilkörpers (12) klemmend an und umgibt andernends den in Abstand (u) benachbarten Endbereich der Ventilhülse (48).

## Beschreibung

Die Erfindung betrifft ein Reifenventil für die Felge eines Luftreifens an einem Fahrzeug mit einem eine Längsbohrung enthaltenden Ventilkörper aus starrem, insbesondere metallischem Werkstoff mit einends angeordnetem Ventilfuß, der eine vom Ventilkörper radial abragende Ringschulter aufweist.

Ein solches Reifenventil ist der EP 0 751 017 B1 der Anmelderin zu entnehmen. Der Ventilkörper dieses Reifenventils besteht aus einer eloxierten Aluminiumlegierung, enthält einen Ventileinsatz und endet in Abstand zur Felge an einer Ventilkappe. Dank eines Außengewindes kann der Ventilkörper eine Schraubhülse aufnehmen, zwischen der und jener Ringschulter des angeformten Ventilfußes die Felge eingeklemmt wird. Dieses Reifenventil endet innerhalb der Felge in einem Signalgehäuse, das zwei Fußelemente zum Aufsetzen auf das Felgenbett sowie zum einstellbaren Lagern in montiertem Zustand aufweist. Als Verbindungselement zwischen Reifenventil und Signalgehäuse dient eine hohl ausgebildete, in die Ventilbohrung des -- mit der Ringschulter einem Sitz im Signalgehäuse anliegenden -- Reifenventils eingreifende Schraube, deren Kopf sich an die ventilferne Seite einer von ihr mit Spiel durchgriffenen Längswand des Signalgehäuses anlegt.

In Kenntnis dieses Standes der Technik hat sich der Erfinder das Ziel gesetzt, ein Reifenventil der eingangs genannten Art so zu verbessern, dass es einfacher gehandhabt und universeller eingesetzt zu werden vermag.

Zur Lösung dieser Aufgabe führt die Lehre des unabhängigen Patentanspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß ist der Ventilkörper mit einer koaxialen Ventilhülse -- bevorzugt aus starrem Werkstoff -- durch ein Zwischenrohr aus elastischem Werkstoff verbunden, und die Ventilhülse ist zur Längsachse des Reifenventils begrenzt neigbar. Dieses elastische Zwischenrohr liegt einends einem Hohlschaft des Ventilkörpers klemmend an und umgibt als mittlerer Ventilbestandteil andernends den in Abstand benachbarten Endbereich der Ventilhülse.

Dank dieser Maßgaben entsteht ein etwa in seinem axialen Mittenbereich elastisch biegbares -- als auch rückstellfähiges -- Reifenventil, das aufgabengemäß erheblich besser zu handhaben ist als ein in sich starres Reifenventil.

Der hier nur einen Teil der Ventillänge bestimmende Ventilkörper ist so gestaltet, dass die Mündung der Längsbohrung des Hohlschaftes an einem daran eine radiale Ringschulter achswärts begrenzenden Kopfrohr angeordnet ist; dieser Ventilkörper ist also mit zumindest zwei Ringschultern ausgestattet, deren eine -- am Ventilfuß -- vom Hohlschaft abkragt und deren andere einen Rücksprung im Querschnitt des Hohlschaftes bildet. Dazu hat es sich als günstig erwiesen, dass im Bereich der Mündung des Hohlschaftes von diesem radial -- in Abstand zur benachbarten inneren Ringschulter -- zumindest ein Außenwulst abragt, der eine auskragende Anlage für das Zwischenrohr bildet.

Zum Festlegen jenes Zwischenrohres soll der Ventilkörper zumindest partiell von einer Schraubhülse umgeben sein, die in radialem Spaltabstand zum Außenwulst des Hohlschaftes verläuft sowie mit diesem eine Klemmpaarung für das Zwischenrohr bildet. Es ist denkbar, diese Schraubhülse mit einem ihr innenseitig anliegenden Bereich des Zwischenrohres kraftschlüssig zu verbinden, beispielsweise zu verkleben oder -- bevorzugt -- einem Vulkanisiervorgang zu unterziehen; sie ist in dieser Ausgestaltung an die Einheit aus Ventilhülse und Zwischenrohr angefügt sowie mit ihr problemlos vom Ventilkörper zu entfernen.

Nach einem weiteren Merkmal der Erfindung ist der der Ventilhülse zugeordnete Endbereich des Zwischenrohres an die benachbarte Hülsenfläche bevorzugt anvulkanisiert. Zudem soll im Bereich einer Ringkante des Zwischenrohres diesem innenseitig ein an die -- an ihrem freien Ende mit einer Ventilkappe zu versehende -- Ventilhülse angeformter Außenring anliegen, der ebenfalls mit dem Zwischenrohr durch einen Vulkanisierungsvorgang fest verbunden ist.

Als günstig hat sich ein zwischen der Ringschulter des Ventilfußes und der gegenüberstehenden Unterkante der Schraubhülse angeordneter Ring aus elastischem Werkstoff als Anlageorgan für die Felge erwiesen; dieser Ring kann durch den Pressdruck der Schraubhülse verformt und an die Kante eines Felgendurchbruches angelegt werden. Zur besseren Lagerung und Druckverteilung am elastischen Ring kann noch zwischen ihn und die Unterkante der Schraubhülse eine Ringscheibe aus starrem Werkstoff eingelegt werden.

Das erfindungsgemäße Reifenventil ist beispielsweise etwa 60 mm lang, und der freie Abstand zwischen Ventilkörper und Ventilhülse soll etwa einem Sechstel bis einem Siebtel dieser Ventillänge entsprechen. Dazu hat es sich als günstig erwiesen, die Länge des Zwischenrohres etwa entsprechend der Länge des Ventilkörpers oder der Länge der Ventilhülse zu wählen; die Länge des Ventilkörpers soll etwas größer sein als die Länge der Hülse.

Um dem Reifenventil eine gute Stabilität zu geben, soll nach einem weiteren Merkmal der Erfindung die Länge des Überlappungsbereiches von Zwischenrohr und Schraubhülse etwa einem Drittel bis einem Viertel der Länge des Ventilkörpers entsprechen sowie/oder die Länge des Überlappungsbereiches von Zwischenrohr und Ventilhülse etwa einem Drittel bis der Hälfte der Länge der Ventilhülse.

Das nach der Erfindung gestaltete Reifenventil hat sich in internen Versuchen der Anmelderin als außergewöhnlich handhabbar bei hoher Stabilität erwiesen.

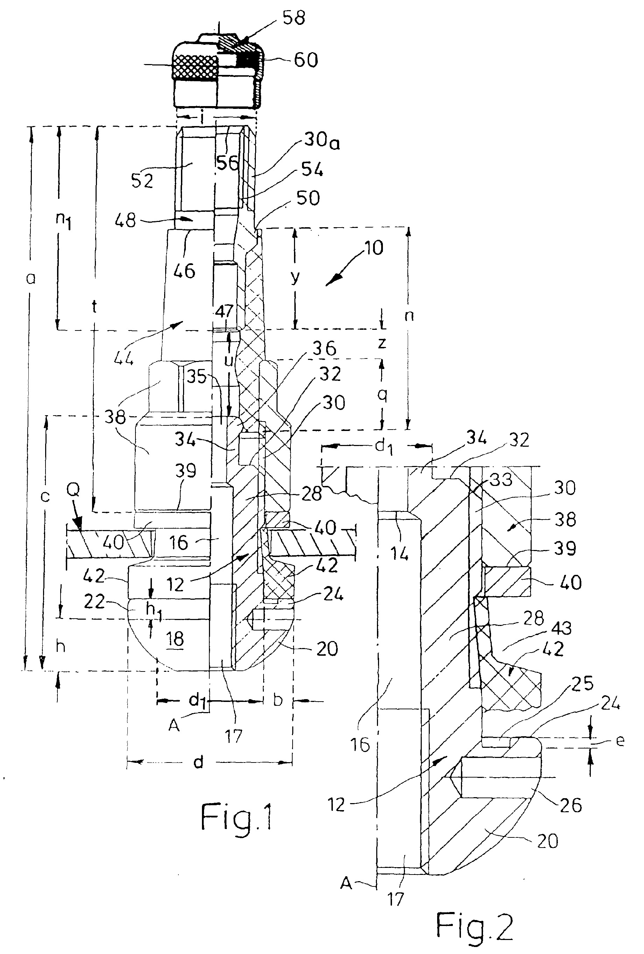

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- Fig. 1:: eine teilweise geschnittene Seitenansicht eines Reifenventils;
- Fig. 2:: ein vergrößerter Ausschnitt aus Fig. 1.

Ein Reifenventil 10 der Länge a von hier 54 mm für einen nicht wiedergegebenen Kraftfahrzeugreifen ist mit einem rohrartigen Ventilkörper 12 der Länge c von 25 mm aus einer Metallegierung -- beispielsweise einer Messinglegierung -- versehen, und letzterer weist in der Ventillängsachse A eine -- bei 14 gestufte -- Längsbohrung 16 auf, die in einer kalottenartigen Stirnfläche 18 eines Ventilfußes 20 des Ventilkörpers 12 mündet. Der von der Stirnfläche 18 der Höhe h von 5 mm ausgehende erste Abschnitt der axialen Bohrung 16 ist als Gewindebohrung 17 zur Aufnahme einer nicht gezeigten -- hohlen -- stählernen Anschlussschraube ausgebildet, welche andernends zum Festlegen einer Radelektronik dient.

An die Stirnfläche 18 jenes Ventilfußes 20 schließt ein zylindrischer Abschnitt 22 geringer Höhe h₁ sowie des Außendurchmessers d von 16 mm an, der anderseits in eine nach innen abgesetzte Ringschulter 24 der Breite b von 3 mm übergeht; diese ist querschnittlich geteilt und in ihrem inneren Bereich mit einer umlaufend eingeformten Ringnut 25 der Tiefe e ausgestattet. Unterhalb der Ringschulter 24 ist im Ventilfuß 20 eine radiale Sackbohrung 26 zu erkennen.

Die Ringschulter 24 umfängt einen Hohlschaft 28 des Ventilkörpers 12 mit Außengewinde 30, der einen Außendurchmesser d₁ von etwa 10 mm anbietet und der an einer oberen Ringschulter 32 -- mit längsschnittlich pultartig gefaßter Kante 33 -- in ein angeformtes axiales Kopfrohr 34 geringeren Außendurchmessers übergeht; dessen Mündung 35 ist von einem radialen Außenwulst 36 umgeben, und sein Außendurchmesser ist ebenfalls kürzer als der Außendurchmesser d jenes zylindrischen Abschnitts 22 des Ventilfußes 20. Dem Außenwulst 36 steht in radialem Abstand eine mit dem Außengewinde 30 des Hohlschaftes 28 verschraubte Schraubhülse 38 gegenüber.

Die zur Ringschulter 24 gerichtete Unterkante 39 der Schraubhülse 38 stößt -- unter Zwischenschaltung einer metallischen Ringscheibe 40 -- an einen elastischen Ring 42 an. Dieser enthält eine außen umlaufende Einformung 43, in welche Bereiche einer Felge Q des Kraftfahrzeugreifens eingelegt zu werden vermögen. Dieser Ring 42 ist andernends auf die Ringschulter 24 aufgesetzt und zu dieser hin durch Drehung der Schraubhülse 38 spannbar.

Zwischen dem Außenwulst 36 des Kopfrohres 34 und der Schraubhülse 38 ist das eine Ende eines Zwischenrohres 44 der Länge n von 20 mm aus elastischem Werkstoff durch des letzteren und der Schraubhülse 38 Klemmkraft kraftschlüssig gehalten. Die Schraubhülse 38 übergreift das Zwischenrohr 44 in einer axialen Überlappungslänge q von hier 7 mm. In diesem Bereich können die beiden Partner 38, 44 untereinander auch durch Vulkanisieren verbunden sein.

In das von einer Ringkante 46 bestimmte obere Ende des Zwischenrohres 44 ist -- mit einem an eine untere Mündungskante 47 anschließenden Bereich -- eine Ventilhülse 48 der Länge n₁ von 20 mm aus einem dem metallischen Werkstoff der Schraubhülse 38 entsprechenden Material eingesetzt und anvulkanisiert, ein der Ventilhülse 48 angeformter Außenring 50 bildet dabei mit dem an jene Ringkante 46 anschließenden Bereich des elastischen Zwischenrohres 44 eine weitere durch Vulkanisieren verbundene Paarung. Deren Überlappungsmaß y beträgt hier 10 mm, der freie Abstand u zwischen Mündungskante 47 und Außenwulst 36 etwas mehr als 8 mm.

Aus dem elastischen Zwischenrohr 44 einer -- zwischen den Überlappungsabschnitten verbleibenden -- freien Länge z ragt ein Schraubende 52 der Ventilhülse 48, welches sowohl mit einem Außengewinde 30ₐ als auch mit einem Innengewinde 54 ausgestattet ist. Der Außendurchmesser i des Schraubendes 52 misst etwa 7 mm, der Abstand t zwischen jener Unterkante 39 der Schraubhülse 38 und dem Mündungsrand 56 der Ventilhülse 48 beträgt etwa 38 mm. Bei 58 ist noch eine auf letztere aufschraubbare Ventilkappe aus eloxierter Aluminiumlegierung angedeutet, in dieser ein in Schließrichtung auf den Mündungsrand 56 auflegbarer Dichtungsring 60.

Aus Gründen der Übersichtlichkeit sind die beweglichen Innenteile des Reifenventils 10 mit ihrem gegen eine Feder verschieblichen Ventilstößel nicht dargestellt.

## Patentansprüche

1. Reifenventil (10) für die Felge (Q) eines Luftreifens an einem Fahrzeug mit einem eine Längsbohrung (16) enthaltenden Ventilkörper (12) aus starrem, insbesondere metallischem Werkstoff mit einends angeordnetem Ventilfuß (20), der eine vom Ventilkörper (12) radial abragende Ringschulter (24) aufweist,
**dadurch gekennzeichnet,**
**dass** der Ventilkörper (12) mit einer koaxialen Ventilhülse (48) durch ein Zwischenrohr (44) aus elastischem Werkstoff in Abstand verbunden und die Ventilhülse (48) zur Längsachse (A) des Reifenventils (10) begrenzt neigbar ist.

2. Reifenventil nach Anspruch 1, **dadurch gekennzeichnet, dass** die Ventilhülse (48) aus starrem Werkstoff, insbesondere aus einem metallischen Werkstoff, besteht.

3. Reifenventil nach Anspruch 1 oder 2, **dadurch gekennzeichnet, dass** das Zwischenrohr (44) einends einem Hohlschaft (28) des Ventilkörpers (12) klemmend anliegt sowie andernends den in Abstand (u) benachbarten Endbereich der Ventilhülse (48) umgibt.

4. Reifenventil nach Anspruch 1 oder 3, **dadurch gekennzeichnet, dass** die Mündung (35) der Längsbohrung (16) des Hohlschaftes (28) an einem daran eine Ringschulter (32) achswärts begrenzenden Kopfrohr (34) angeordnet ist.

5. Reifenventil nach einem der Ansprüche 1 bis 4, **dadurch gekennzeichnet, dass** im Bereich der Mündung (35) des Hohlschaftes (28) von diesem radial zumindest ein Außenwulst (36) abragt, der eine auskragende Anlage für das Zwischenrohr (44) bildet.

6. Reifenventil nach einem der Ansprüche 1 bis 5, **dadurch gekennzeichnet, dass** der Ventilkörper (12) zumindest partiell von einer Schraubhülse (38) umgeben ist, die in radialem Abstand zum Außenwulst (36) des Hohlschaftes (28) verläuft sowie mit diesem eine Klemmpaarung für das Zwischenrohr (44) bildet, wobei gegebenenfalls die Schraubhülse (38) mit einem ihr innenseitig anliegenden Bereich des Zwischenrohres (44) flächig kraftschlüssig verbunden ist.

7. Reifenventil nach Anspruch 6, **dadurch gekennzeichnet, dass** die Schraubhülse (38) mit einem ihr innenseitig anliegenden Bereich des Zwischenrohres (44) durch einen Vulkanisiervorgang verbunden ist.

8. Reifenventil nach einem der Ansprüche 1 bis 7, **dadurch gekennzeichnet, dass** der der Ventilhülse (48) zugeordnete Endbereich des Zwischenrohres (44) an die benachbarte Hülsenfläche kraftschlüssig angeschlossen ist, wobei gegebenenfalls der der Ventilhülse (48) zugeordnete Endbereich des Zwischenrohres (44) an die benachbarte Hülsenfläche anvulkanisiert ist.

9. Reifenventil nach Anspruch 3 oder 8, **dadurch gekennzeichnet, dass** im Bereich einer Ringkante (46) des Zwischenrohres (44) diesem innenseitig ein Außenring (50) der Ventilhülse (48) anliegt, der mit dem Zwischenrohr kraftschlüssig flächig verbunden ist, wobei gegebenenfalls der Außenring (50) mit dem Zwischenrohr (44) durch einen Vulkanisiervorgang verbunden ist.

10. Reifenventil nach einem der Ansprüche 1 bis 11, **dadurch gekennzeichnet, dass** sich zwischen der Ringschulter (24) des Ventilfußes (20) und der gegenüberstehenden Unterkante (39) der Schraubhülse (38) ein Ring (42) aus elastischem Werkstoff als Anlageorgan für die Felge (Q) erstreckt sowie gegebenenfalls zwischen der Unterkante (39) der Schraubhülse (38) und dem elastischen Ring (42) eine Ringscheibe (40) aus starrem Werkstoff vorgesehen ist.

11. Reifenventil nach einem der Ansprüche 1 bis 10 **dadurch gekennzeichnet, dass** der freie Abstand (n) zwischen Ventilkörper (12) sowie Ventilhülse (48) etwa einem Sechstel bis einem Siebtel der Ventillänge (a) entspricht, und/oder dass die Länge (n) des Zwischenrohres (44) etwa der Länge (c bzw. n₁) des Ventilkörpers (12) bzw. der Ventilhülse (48) entspricht.

12. Reifenventil nach einem der Ansprüche 1 bis 11, **dadurch gekennzeichnet, dass** die Länge (c) des Ventilkörpers (12) etwas größer ist als die Länge (n₁) der Hülse (48).

13. Reifenventil nach einem der Ansprüche 1 bis 12, **dadurch gekennzeichnet, dass** die Länge (q) des Überlappungsbereiches von Zwischenrohr (44) und Schraubhülse (38) etwa einem Drittel bis einem Viertel der Länge (c) des Ventilkörpers (12) entspricht.

14. Reifenventil nach einem der Ansprüche 1 bis 13,
**dadurch gekennzeichnet, dass** die Länge (y) des Überlappungsbereiches von Zwischenrohr (44) und Ventilhülse (48) etwa einem Drittel bis der Hälfte von deren Länge (n₁) entspricht.
